# EUROPÄISCHE PATENTANMELDUNG

(11) **EP 0 671 794 A1**
(43) Veröffentlichungstag der Anmeldung: **13.09.1995**
(21) Anmeldenummer: 95810158.6
(22) Anmeldetag: 10.03.1995
(51) Int. Cl.: H02B 1/21, H02B 1/18

(54) **Basiskörper für Anspeise- oder Abgangsgeräte zur Montage auf einem tragenden Sammelschienen-System**

(30) Priorität: 11.03.1994 CH 729/94
(71) Anmelder: WEBER AG, CH-6020 Emmenbrücke (CH)
(72) Erfinder: Mischon, Daniel, CH-6206 Neuenkirch (CH); Gauch, René, CH-6204 Sempach Stadt (CH)
(74) Vertreter: Hug Interlizenz AG

(57) **Zusammenfassung**

Der Basiskörper (20) für Anspeise- oder Abgangsgeräte ist zur Montage auf einem tragenden Sammelschienen-System vorgesehen. Er weist einen Verriegelungs-Schieber (27) zur formschlüssigen Festlegung des Basiskörpers (20) auf den Sammelschienen (24,25,26) auf. Der Schieber (27) ist in einem Schlitz (28) des Basiskörpers (20) quer zur Sammelschienen-Längsrichtung verschiebbar. Eine Verzahnung (34) am Schieber (27) sowie eine korrespondierende Verzahnung (35) am Basiskörper (20) ermöglicht eine Arretierung des Schiebers (27) in verschiedenen Positionen. Der Schieber (27) ist einstückig ausgebildet. Die genannten Verzahnungen (34,35) sind in gegenseitigem elastischem Eingriff gehalten. Er weist ein ausserhalb des Schlitzes (28) angeordnetes Betätigungsteil (29) auf, durch Druck auf welches der gegenseitigen Eingriff der korrespondierenden Verzahnungen (34,35) lösbar ist.

## Beschreibung

### TECHNISCHES GEBIET

Die vorliegende Erfindung bezieht sich auf das Gebiet der Energieverteilung mittels Sammelschienen-Systemen, bei welchen die Sammelschienen auch als Träger für die Anspeise- bzw. Abgangsgeräte dienen. Sie betrifft insbesondere einen Basiskörper für derartige Geräte mit einem Verriegelungs-Schieber zur formschlüssigen Festlegung des Basiskörpers auf den Sammelschienen in Verbindung mit die Sammelschienen hintergreifenden Haken am Basiskörper oder an in diesen eingesetzten Klemmen, wobei der Schieber in einem Schlitz des Basiskörpers quer zur Sammelschienen-Längsrichtung verschiebbar ist und eine Verzahnung am Schieber sowie eine korrespondierende Verzahnung am Basiskörper eine Arretierung des Schiebers in verschiedenen Positionen ermöglicht.

Die formschlüssige Festlegung des Basiskörpers vermittels des Verriegelungs-Schiebers auf den Sammelschienen dient im wesentlichen zur Montageerleichterung bis die definitiven und dann auch kraftschlüssigen speise- sowie abgangsseitgen Anschlussverbindungen hergestellt sind.

### STAND DER TECHNIK

Ein Basiskörper der vorgenannten Art ist beispielsweise aus der DE 3316203 C2 bekannt, wobei hier der Verriegelungs-Schieber durch ein Klemmstück, eine Klemmschraube sowie ggf. ein zusätzliches Gegenstück ausgebildet ist. Der Verriegelungs-Schieber besteht demnach zumindest aus zwei Teilen. Klemmstück oder Gegenstück sind mit einer Verzahnung versehen, die mit einer korrespondierenden Verzahnung am Basiskörper in Eingriff gebracht werden kann. Zum Verschieben des Schiebers muss die Klemmschraube gelöst und zu seiner Arretierung angezogen werden, wozu ein Schraubenzieher oder dergleichen erforderlich ist.

Aus dem deutschen Gebrauchsmuster G 8903582.8 ist ebenfalls ein Basiskörper mit einer Sammelschienen-Verriegelung bekannt, wobei als Verrieglungselement ein an der Unterseite des Basiskörpers angeordneter, im Basiskörper federnd verschwenkbarer Klemmhebel vorgesehen ist, welcher mehrere hintereinanderliegende Rastvorsprünge zum lösbaren Hintergreifen unterscheidlich breiter Sammelschienen aufweist. Die Arretierung ergibt sich hierbei selbsttätig bei der Montage. Zum Entriegeln der Verrastung ist jedoch wiederum ein Schraubenzieher oder dergleichen erforderlich. Ferner ist die mit dem Werkzeug erreichte Bewegung des Klemmhebels nicht sichtbar und infolge der sehr grossen Weg-Übersetzung auch nicht gut dosierbar.

Weitere Basiskörper mit Sammelschienen-Verriegelungen sind bekannt aus der DE 3940154 C1, der EP 170161 B1 sowie dem deutschen Gebrauchsmuster G 9210090.2. Bei allen diesen Ausführungsformen sind für die Sammelschienen-Verriegelung mehrere Teile verwendet. Zur ihrer Bedienung ist jeweils auch ein Werkzeug erforderlich.

### DARSTELLUNG DER ERFINDUNG

Aufgabe der vorliegenden Erfindung ist es, einen Basiskörper der eingangs genannten Art anzugeben, welcher bezüglich der Sammelschienen-Verriegelung einfacher aufgebaut, bezüglich seiner Stellung eindeutig erkennbar sowie ohne Werkzeug einfach zu bedienen ist. Diese Aufgabe wird gelöst durch einen Basiskörper, wie er im Patentanspruch 1 gekennzeichnet ist.

Vorteilhafte Ausgestaltungen des Erfindungsgegenstandes sind in den abhängigen Ansprüchen gekennzeichnet.

Nachfolgend werden unter Bezugnahme auf die beigefügten Zeichnungen zwei Ausführungsbeispiele der Erfindung erläutert.

### KURZE ERLÄUTERUNG DER FIGUREN

Es zeigen:
- Fig. 1: einen Basiskörper mit Verriegelungsschlitz,
- Fig. 2: den zugehörigen Verriegelungs-Schieber
- Fig. 3: schematisch sowie in geschnittener Darstellung einen weiteren Basiskörper mit einem anders ausgebildeten Verriegelungs-Schieber, und
- Fig. 4: den Verriegelungs-Schieber von Fig. 3 in Einzeldarstellung.

### WEGE ZUR AUSFÜHRUNG DER ERFINDUNG

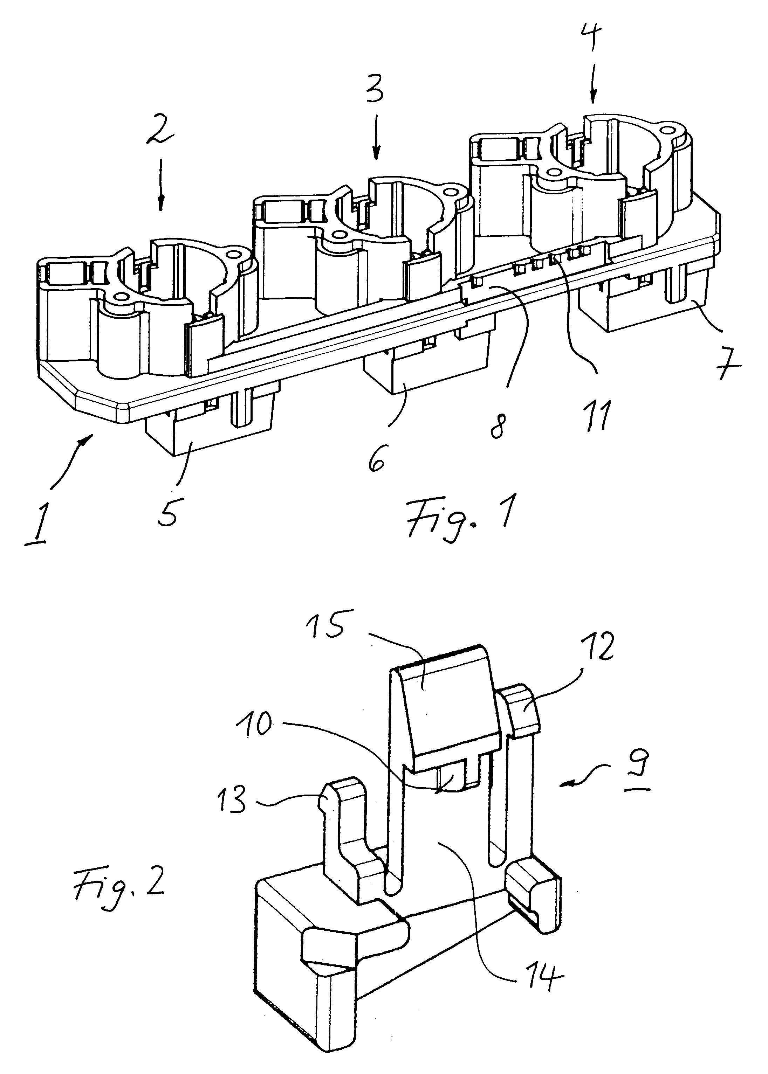

Der längliche Basiskörper 1 von Fig.1 weist in Serie drei Steckeinsätze 2, 3 und 4 für Sicherungen auf. Auf seiner Unterseite sind Haken 5, 6 und 7 an ihm angeformt, welche dazu vorgesehen sind, im Montagezustand die hier nicht dargestellten Sammelschienen zu hintergreifen. 8 bezeichnet einen Schlitz im Basiskörper 1, in welchen der Sammelschienen-Verrieglungs-Schieber 9 von Fig. 2 von unten her einsteckbar ist und zwar derart, dass der Rastnocken 10 mit einer der Rastvertiefungen 11 am oberen Rand des Schlitzes 8 in Eingriff kommt.

Vermittels der sich beim Einstecken elastisch ausbiegenden Rastarme 12 und 13 wird der Schieber 9 im Schlitz 8 gegen Herausfallen gesichert.

Der bereits erwähnte Rastnocken 10 ist an einem weiteren, elastisch nachgiebigen Arm 14 des Schiebers 9 ausgebildet, dessen oberes Ende 15 im eingesteckten Zustand aus dem Schlitz 8 oben herausragt. Dieses Ende 15 stellt das Betätigungsteil des Schiebers 9 dar. Zur Verschiebung des Schiebers 9 im Schlitz 8 entlang dessen Längserstreckung muss der Arm 14 zunächst durch Druck, z.B. mit einem Finger, auf dessen oberes Ende 15 seitlich weggedrückt werden, bis der Nocken 10 ausser Eingriff mit den Rastvertiefungen 11 kommt. Danach kann der Schieber durch zusätzliche Druckausübung in der gewünschten Verschieberichtung verschoben werden. Bei Loslassen des Betätigungsteils 15 rastet der Nocken 10 wieder in einer der Rastvertiefungen 11 ein.

Die Rastvertiefungen 11 und/oder der Nocken 10 können, z.B. durch einseitige Abschrägung, so ausgebildet sein, dass die Verrastung in einer Verschieberichtung, insbesondere zur Verriegelungsstellung des Schiebers hin, selbstlösend ist. Die vorbeschriebene seitliche Ausbiegung des Betätigungsarmes 14 müsste dann nur zur Sammelschienen-Entriegelung und zur Rückverschiebung des Schiebers in seine Ausgangs- bzw. Entriegelungsstellung vorgenommen werden.

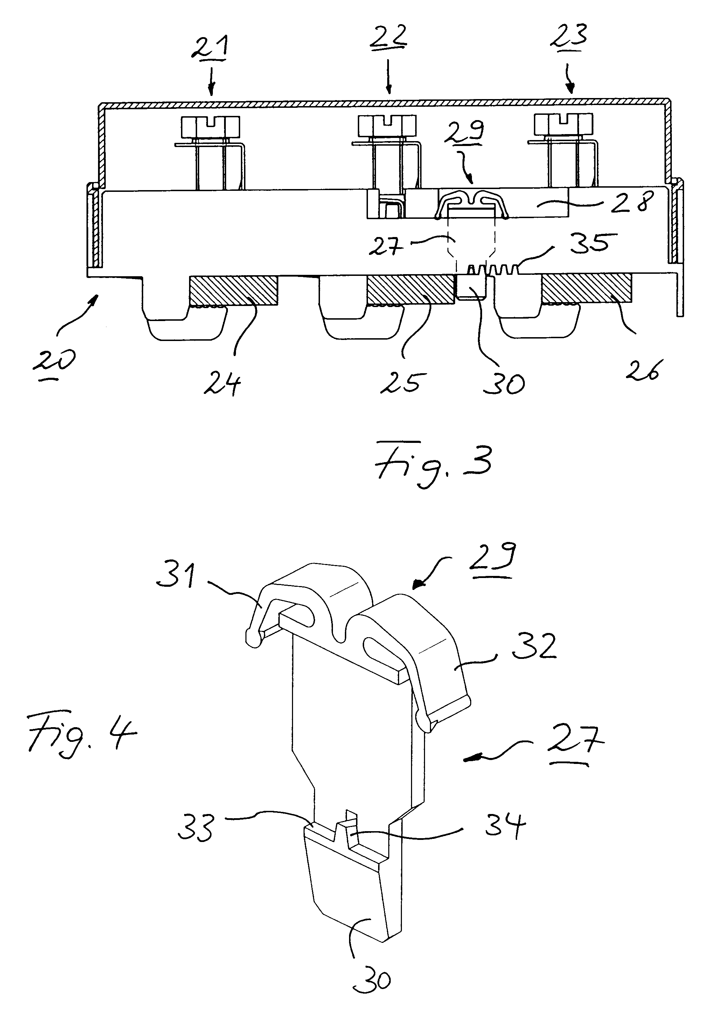

Beim Basiskörper 20 von Fig. 3 sind anstelle von angeformten Haken in diesen eingesetzte Sammelschienen-Klemmen 21, 22, 23 vorgesehen, welche allerdings ihrerseits Haltbacken zum umfassen bzw. Hintergreifen der hier zu erkennenden Sammelschienen 24, 25 und 26 aufweisen. Auch hier ist wieder ein Verriegelungsschieber 27 in einen Schlitz 28 im Basiskörper 20 eingesteckt, und zwar derart, dass er mit einem Betätigungsteil 29 oben und mit einem Rastende 30 unten über den Schlitz 28 vorsteht.

Am Betätigungsteil 29 sind an den Schieber 27 zwei Federzungen 31 und 32 angeformt. Das Rastende 30 weist einen Rastvorsprung 33 sowie einen Rastnocken 34 auf.

Im eingesteckten Zustand stützen sich die beiden Federzungen 31, 32 gegen den Basiskörper 20 bzw. die Kanten des Schlitzes 28 in diesem ab und halten den Rastnocken 34 in elastischem Eingriff mit einer Verzahnung respektive mit Rastvertiefungen 35 auf der gegenüberliegenden Kante des Schlitzes.

Zur Sicherung des Schiebers 27 im Schlitz 28 gegen Herausfallen dient hier der Rastvorsprung 33. Beim Einstecken des Schiebers in den Schlitz bewirkt dieser ein Ausbiegen der hier etwas nachgiebig ausgebildeten äusseren Schlitz-Seitenwand und umgreift im voll eingesteckten Zustand die untere Kante dieser Schlitzwand, in der auch die Rastvertiefungen 35 ausgebildet sind.

Zum Verschieben des Schiebers 27 im Schlitz 28 entlang dessen Längserstreckung und damit wiederum quer zur Sammelschienen-Längsrichtung genügt es, durch Druckausübung mit einem Finger auf das Betätigungsteil 29 den Schieber 27 im Schlitz etwas nach unten zu drücken bis der Rastnocken 34 ausser Eingriff mit den Rastvertiefungen 35 ist. Danach kann der Schieber durch zusätzliche Druckausübung in der gewünschten Verschieberichtung verschoben werden. Bei Loslassen des Betätigungsteils 29 rastet der Nocken 34 wieder in einer der Rastvertiefungen 35 ein.

Eine selbstlösende Verrastung in einer Verschieberichtung ist bei der Ausführungsform von Fig. 3 und 4 natürlich auch möglich sowie zweckmässig.

Schieber 27 und/oder Schlitz 28 können so ausgebildet sein, dass der Schieber auch um 180° verdreht eingesetzt werden kann.

In beiden Ausführungsformen sind die Rastvertiefungen vorzugsweise so angeordnet, dass für die üblichen Sammelschienen-Abmessungen ein praktisch spielfreies Arretieren erfolgt.

Die Schieber von Fig. 2 und 4 können z.B. Kunststoff-Spritzgussteile sein.

## Patentansprüche

1. Basiskörper (1,20) für Anspeise- oder Abgangsgeräte zur Montage auf einem tragenden Sammelschienen-System mit einem Verriegelungs-Schieber (9,27) zur formschlüssigen Festlegung des Basiskörpers (1) auf den Sammelschienen (24,25,26) in Verbindung mit die Sammelschienen hintergreifenden Haken (5,6,7) am Basiskörper (1,20) der an in diesen eingesetzten Klemmen (21,22,23), wobei der Schieber (9,27) in einem Schlitz (8,28) des Basiskörpers (1,20) quer zur Sammelschienen-Längsrichtung verschiebbar ist und eine Verzahnung (10,34) am Schieber (9,27) sowie eine korrespondierende Verzahnung (11,35) am Basiskörper (1,20) eine Arretierung des Schiebers (9,27) in verschiedenen Positionen ermöglicht, dadurch gekennzeichnet, dass der Schieber (9,27) einstückig ausgebildet ist, dass sich die genannten Verzahnungen (10,11,34,35) in gegenseitigem elastischem Eingriff befinden und dass der Schieber (9,27) ein ausserhalb des Schlitzes (8,28) angeordnetes Betätigungsteil (15,29) aufweist, durch Druck auf welches senkrecht zur Verschieberichtung des Schiebers (9,27) der gegenseitige Eingriff der korrespondierenden Verzahnungen (10,11,34,35) lösbar und durch gleichzeitigen Druck auf welches in der gewünschten Verschieberichtung der Schieber (9,27) verschiebbar ist.

2. Basiskörper nach Anspruch 1, dadurch gekennzeichnet, dass der Schieber (9,27) unter elastischer Deformation an ihm selbst ausgebildeter Teile (12,13) und/oder mindestens einer Schlitzwand in den Schlitz (8,28) eingesteckt und darin gegen Herausfallen verrastet ist.

3. Basiskörper nach einem der Ansprüche 1 oder 2, dadurch gekennzeichnet, dass die korrespondierenden Verzahnungen (10,11,34,35) bezüglich einer Verschiebung des Schiebers (9,26) in seine Arretierungsstellung selbstlösend ausgebildet sind.

4. Basiskörper nach Anspruch 1 oder 2, dadurch gekennzeichnet, dass der Schieber (27) mindestens eine, an seinem Betätigungsteil (29) angeformte und sich gegen den Basiskörper (20) abstützende Federzunge (31,32) aufweist, welche einen auf der gegenüberliegenden Schlitzseite an ihm angeformten Rastnocken (34) in Eingriff mit einer von mehreren dort am Basiskörper ausgebildeten Rastvertiefungen (35) hält, und dass dieser Eingriff durch Durchbiegen der mindestens einen Federzunge (31,32) unter Druckausübung auf das Betätigungselement (29) senkrecht zur Schlitz- und zur Sammelschienen-Längsrichtung lösbar ist.

5. Basiskörper nach Anspruch 1, dadurch gekennzeichnet, dass der Schieber (9) an seinem Betätigungsteil (15) einen Rastnocken (10) aufweist, welcher in Eingriff mit einer von mehreren auf der gleichen Schlitzseite am Basiskörper (1) ausgebildeten Rastvertiefungen (11) ist und dass dieser Eingriff durch seitliches Ausbiegen des Betätgungsteils (15) in Sammelschienen-Längsrichtung lösbar ist.
